# EUROPÄISCHE PATENTSCHRIFT

(11) **EP 2 040 897 B1**
(45) Veröffentlichungstag und Bekanntmachung des Hinweises auf die Patenterteilung: **18.11.2009**
(21) Anmeldenummer: 07765141.2
(22) Anmeldetag: 09.07.2007
(51) Int. Cl.: B29C 33/52, B29C 45/44

(54) **VERWENDUNG VON SALZKERNEN FÜR KUNSTSTOFFGUSS UND VERFAHREN ZUR HERSTELLUNG VON KUNSTSTOFF-HOHLFORMKÖRPERN**
USE OF SALT CORES FOR PLASTIC MOLDING AND PROCESS OF MANUFACTURING HOLLOW PLASTIC BODIES
USAGE DE NOYAUX DE SEL POUR LE MOULAGE DE MATIÈRES PLASTIQUES ET PROCÉDÉ DE FABRICATION DE PIÈCES CREUX EN MATIÈRE PLASTIQUE

(30) Priorität: 07.07.2006 DE 102006031531
(43) Veröffentlichungstag der Anmeldung: 01.04.2009
(73) Patentinhaber: Emil Müller GmbH, 91452 Wilhermsdorf (DE)
(72) Erfinder: GRÖZINGER, Hans, Dieter, 91456 Diespeck (DE)
(74) Vertreter: Féaux de Lacroix, Stefan
(86) Internationale Anmeldenummer: PCT/EP2007/006065
(87) Internationale Veröffentlichungsnummer: WO 2008/003518

(56) Entgegenhaltungen:
- EP-A- 0 718 085
- EP-A1- 0 909 600
- EP-A2- 0 313 923
- WO-A-2004/071738

## Beschreibung

Die Erfindung betrifft die Verwendung von wasserlöslichen Salzkernen in Gießformen zur Herstellung von Hohlformkörpern im Kunststoffguß und ein entsprechendes Verfahren zur Herstellung von Kunststoff-Hohlformkörpern.

Zur Herstellung von Kunststoff Formkörpern sind unterschiedliche technische Verfahren bekannt. Massive Formkörper werden beispielsweise durch Spritzgießen in Hohlformen hergestellt. Für Hohlkörper oder ähnliche Produkte kann das Blasformen ein geeignetes Verfahren sein.

Beim Spritzgießen von Hohlformkörpern werden üblicherweise zwei Halbformen hergestellt, die nachträglich verbunden werden müssen. Hierbei müssen Fertigungstoleranzen eingehalten werden, um die genaue Passform zu gewährleisten. Die mechanische Stabilität derartiger zusammengefügter Bauteile ist nicht immer ausreichend.

EP-A-0 313 923 betrifft ein Verfahren und einen Formkern zur Herstellung von Kunststoff-Gegenständen mit Hinterschneidungen. Als Formkern werden wasserlösliche Polymere wie Polyacrylate eingesetzt, die beispielsweise als Füllstoff ein wasserlösliches Salz enthalten können. Der Anteil des Kunststoffs beträgt mindestens 25 Gew.-%, vorzugsweise mindestens 40 Gew.-%, damit der Formkern zufrieden stellende mechanische Eigenschaften aufweist, siehe Seite 4, Zeilen 2 bis 10. Die Herstellung des Formkerns kann durch Hohlkörperspritzen oder mit dem Cinpress-Verfahren erfolgen. Als Grundstoffe zum Umhüllen des Kerns können Thermoplaste, Duroplaste, Elastomere sowie thermoplastische Elastomere mit oder ohne Faserverstärkung sowie mit oder ohne Additiven, wie Gleitmitteln, Antioxidantien, Pigmenten usw., verwendet werden.

WO 2004/071738 betrifft Beschichtungsmassen für Gusskerne. Die Beschichtungsmassen sollen die Oberflächenbeschaffenheiten, insbesondere die Rautiefe von Salzkernen verbessern. Die Beschichtungsmaterialien enthalten typischerweise einen Alkohol als Lösungsmittel, Salzteilchen und ein organisches Bindemittel. Die Gusskerne können zur Herstellung spritzgegossener Kunststoffteile eingesetzt werden. Es ist nicht angegeben, dass die Salzkerne selbst Bindemittel enthalten, sondern nur die oberflächlichen Beschichtungen weisen ein Bindemittel auf.

EP-A-0 718 085 betrifft ein Verfahren zur Herstellung von Hohlkörpern aus Plastikmaterialien und eine entsprechende Vorrichtung. Alkalische Salzkerne können durch Kaltverpressen und anschließendes Sintern hergestellt werden. Das Verpressen erfolgt bei Drücken von nicht weniger als 1000 bar, und die Sinterbehandlung erfolgt bei Temperaturen von 200 bis 300°C. Die Kerne werden zum Umspritzen mit Kunststoffmaterialien eingesetzt. Bindemittel für den Salzkern werden nicht erwähnt.

EP-A-0 909 600 betrifft eine Vorrichtung zur Herstellung von durch Umgießen oder Spritzgießen hergestellten Artikeln unter Verwendung von Salzkernen. Die Salzkerne werden dabei aus einer übersättigten Salzlösung hergestellt. Die erhaltenen Salzkerne können beispielsweise für den Kunststoffguss eingesetzt werden. Eine Kompaktierung der Salzkerne ist erwähnt. Es gibt keinen Hinweis auf die Verwendung von Bindemitteln in den Salzkernen.

Aufgabe der vorliegenden Erfindung ist die Bereitstellung eines Verfahrens zur Herstellung von Kunststoff-Hohlformkörpem, das die Nachteile der bekannten Verfahren vermeidet und die Herstellung von Hohlformkörpern ohne Naht erlaubt. Vorzugsweise sollen die Hohlformkörper eine verbesserte mechanische und/oder thermische Stabilität aufweisen.

Die Aufgabe wird erfindungsgemäß gelöst durch Verwendung von wasserlöslichen Salzkernen, die 0,2 bis 20 Gew.-%, bezogen auf den gesamten Salzkern, an organischen und/oder anorganischen Bindemitteln enthalten, in Gießformen zur Herstellung von Hohlformkörpern im Kunststoffguß. Dabei ist der Kunststoffguß vorzugsweise ein Kunststoffspritzguß mit thermoplastischen Kunststoff Formmassen.

Die Aufgabe wird zudem gelöst durch ein Verfahren zur Herstellung von Kunststoff-Hohlformkörpem durch Positionieren eines wasserlöslichen Salzkerns in einer Gießform, Umgießen des Salzkerns mit einer thermoplastischen Kunststoff-Formmasse und nach dem Erstarren der thermoplastischen Kunststoff-Forrnrrasse Herausspülen des Salzkerns mit einem wasserhaltigen Lösungsmittel, wobei der wasserlösliche Salzkern neben wasserlöslichem Salz 0,2 bis 20 Gew.-%, bezogen auf den gesamten Salzkern, organisch und/oder anorganische Bindemittel, und gegebenenfalls weitere Additive enthält.

Es wurde erfindungsgemäß gefunden, dass das aus dem Aluminiumdruckguß bekannte Verfahren zur Herstellung von Hohlformkörpern unter Einsatz von wasserlöslichen Salzkernen auf Kunststoff-Formmassen übertragbar ist.

Die thermische und Druckbeanspruchung der Salzkerne und Gießformen beim Metalldruckguss und Kunststoffspritzguß ist deutlich unterschiedlich, ebenso die Temperatur und Wärmekapazität des Gießmaterials. Auch das Verhalten des Gießmaterials beim Gießen ist deutlich unterschiedlich. Bislang wurde davon ausgegangen, dass aufgrund dieser deutlich unterschiedlichen Material- und -verarbeitungseigenschaften der Metallguß unter Verwendung von Salzkernen nicht auf den Kunststoff(spritz)guß übertragbar sei. Es wurde nun gefunden, dass die Salzkerne dem Druck beim Kunststoffspritzguß standhalten. Besonders vorteilhaft werden dabei Salzkerne eingesetzt, die Bindemittel enthalten. Es können aber auch Salzkerne aus Reinsalzen, d. h. ohne Bindemittel oder Additive, eingesetzt werden.

Für eine Beschreibung des Aluminiumdruckgießens unter Verwendung von wasserlöslichen Salzkernen kann auf DE-B-103 59 547, EP-A-1 293 276, EP-A-0 019 015, EP-A-0 501 549, US 3,963,818, WO 2004/082866 und weitere Schriften des Standes der Technik verwiesen werden. Weitere Angaben zu Metalldruckgussverfahren finden sich unter den nachstehend bei den Bindemitteln diskutierten Schriften.

Das Metalldruckgussverfahren ist zudem auch in Castings, John Campbell, Elsevier Butterworth Heinemann Verlag, 1991 (reprinted 2004) beschrieben.

Für eine Beschreibung des Spritzgieß-Verfahrens kann auf Römpp Chemielexikon, 9. Aufl., Stichwort "Spritzgießen" verwiesen werden. Dieses Verfahren wird hauptsächlich bei nicht härtbaren Formmassen angewendet, die im Werkzeug durch Abkühlen erstarren. Dabei werden die thermoplastischen Formmassen (beispielsweise Pulver, Körner, Würfel oder Pasten) bis zur Verflüssigung erwärmt und dann unter hohem Druck von bis zu 1400 bar in geschlossene, zweiteilige, z. B. stählerne, wassergekühlte Hohlformen gespritzt, wo sie abkühlen und erstarren. Das Aufschmelzen und Erhitzen der Formmassen erfolgt beispielsweise in Extrudern.

Als thermoplastische Kunststoff-Formmasse können alle geeigneten derartigen Formmassen eingesetzt werden. Vorzugsweise basiert die Kunststoff-Formmasse auf Styrolhomo- und -copolymeren, Polyolefinhomo- und -copolymeren, Polyamiden, Polycarbonaten, Polyethern, Polyestern, Polyketonen, Polysulfonen, Polyurethanen, Polyelastomeren und deren Gemischen. Auch weitere Kunststoffe wie Polyarylenoxide, Polyarylensulfide, Polyimide, Polyetherimide, Polyetheretherketone, Acetale, usw. können eingesetzt werden. Besonders bevorzugt basieren die Kunststoff-Formmassen auf Polystyrol, Polystyrol-/acrylnitril, Polyethylen, Polypropylen, Polyamid-6, Polyamid-66, Polycarbonaten, Poly(meth)acrylsäureestern, Polyvinylchlorid oder deren Gemischen.

Die einzelnen Polymere können dabei Additive und Füllstoffe enthalten. Beispielsweise können sie durch Kautschukteilchen schlagzäh ausgerüstet werden. Beispiele für derartige Formmassen sind ABS- und ASA-Formmassen, die einen Butadien- oder AcrylatKautschuk in Form kleiner Teilchen enthalten. Auch Polymerblends, das heißt Mischungen von Polymeren, können eingesetzt werden. Die Formmassen können Additive wie Formungshilfsmittel, Farbstoffe, Pigmente, Fasern oder andere Füllstoffe zusätzlich enthalten.

Gemäß einer Ausführungsform der Erfindung sind die Kunststoff-Formassen faserverstärkt, wobei vorzugsweise 10 bis 60 Gew.-%, besonders bevorzugt 20 bis 40 Gew.-%, insbesondere 25 bis 35 Gew.-% Fasern, bezogen auf die gesamte Formmasse, vorliegen können. Es können Glasfasern, Carbonfasern, Mineralfasern usw. eingesetzt werden. Bevorzugt sind Glasfasern, die mit einer (z.B. Silan- oder Borat-)Schlichte versehen sein können. Es können Kurz- oder Langfasern eingesetzt werden. Auch andere Füllstoffe wie Whisker, Mica, Kugeln etc. können eingesetzt werden. Bei der Verwendung von Glasfasern können Formteile mit im Wesentlichen konstanter Wandstärke hergestellt werden. Bei der üblichen Herstellung durch Verschweißen von Formhälften muss die Wandstärke am Schweißwulst in der Regel verdoppelt werden.

In weitem Umfang eingesetzte Kunststoffe sind LDPE (Polyethylen mit niedriger Dichte), HDPE (Polyethylen mit hoher Dichte), PP (Polypropylen), PVC (Polyvinylchlorid) und PS (Polystyrol).

Bei den Kautschuken können Styrol-Butadien-, Polybutadien-, Ethylen-Propylen-, Polychloropen-, Polyisopren-, Nitril-, Butyl-, Silicon- und Urethankautschuk genannt werden. Bei den Polyestern und Polyethern können beispielsweise auch Celluloseether und Celluloseester genannt werden, und auch der Einsatz von Schaumkunststoffen ist möglich.

Da die erfindungsgemäßen Kunststoff-Hohlformkörper vorzugsweise im Automobilsektor eingesetzt werden, werden sie vorzugsweise aus solchen Werkstoffen hergestellt, die in diesem Bereich üblicherweise eingesetzt und bei den Umgebungsbedingungen stabil sind. Als besonders bevorzugte Beispiele können Polystyrol, Polyethylen, Polypropylen genannt werden. Auch schlagzäh modifizierte Acrylnitril-Butadien-Styrol-(ABS)-Copolymere oder Acrylat-Styrol-Acrylnitril-(ASA)-Copolymere können bevorzugt eingesetzt werden.

Der Salzkern basiert auf wasserlöslichen Salzen wie Natriumchlorid oder Kaliumchlorid, die in geeigneter Korngröße eingesetzt werden. Es können auch weitere wasserlösliche Salze vorliegen. Zudem können geringere Mengen an nicht wasserlöslichen Salzen ebenfalls in den Salzkernen enthalten sein. Für weitere mögliche Inhaltsstoffe kann auf die vorstehend angegebenen Schriften zum Metalldruckguß verwiesen werden. Auch die nachstehend aufgeführten Schriften zu den Bindemitteln enthalten weitere Angaben zu möglichen Inhaltsstoffen der Salzkerne. Besonders bevorzugt werden die Salzkerne zusammen mit anorganischen Phosphaten eingesetzt, wie sie in der DE-B-103 59 547 beschrieben sind.

Die Bindemittel können dabei nach den praktischen Anforderungen ausgewählt werden und an die jeweiligen Salzkerne angepasst werden. So können die Kerne verdichtet oder nicht verdichtet, gesintert oder nicht gesintert sein. Sie können zudem gebunden oder nicht gebunden sein. Die Salzkerne können dabei aus allen üblicherweise eingesetzten Salzen aufgebaut sein. Neben dem bevorzugten Natriumchlorid und Kaliumchlorid können auch Kaliumnitrat, Kaliumnitrit, Natriumnitrat, Natriumnitrit, Kupferchlorid, Lithiumchlorid, Bleichlorid, Magnesiumchlorid, Bariumchlorid, Calciumchlorid und deren Gemische eingesetzt werden. Geeignete Gemische sind beispielsweise in der WO O1/02112 beschrieben. Die Salzkerne können dabei durch Fasern oder Whisker oder Zuschlagstoffe modifi-r.iert werden. Beispielsweise können Graphit, Silicium, Aluminiumoxid oder Siliciumcarbid als Zuschlagstoffe verwendet werden. Diese Zuschlagstoffe sind ebenfalls in der WO 01/02112 beschrieben. Ferner können Trockenmittel wie Magnesiumcarbonat oder Magnesiumphosphat eingesetzt werden, wie sie auch in der WO 85/04605 beschrieben sind. Zudem können Ausdehnungsmodifiziermittel eingesetzt werden, um die thermische Ausdehnung zu steuern und Belastungsbrüche zu vermeiden. Beispiele geeigneter Expansionsmodifiziermittel sind Aluminiumoxid, Glaspulver, Kupferlegierungen, Graphit, Talk oder feine Aluminiumoxid/Silikat-Fasem. Derartige Modifiziermittel sind ebenfalls in WO 85/04605 beschrieben. Als Kernmaterialien können ferner Alkalimetallmetasilikate und deren Gemische mit Alkalimetalldisilikaten eingesetzt werden. Beispielsweise können 20 bis 70 Gew.-% Metasilikat mit 30 bis 80 Gew.-% Disilikat kombiniert werden. Ein Beispiel sind Kalium und/oder Lithiummetasilikat in Kombination mit Kalium und/oder Lithiumdisilikat, wobei zu dem Natriumdisilikat und/oder Natriummetasilikat zugesetzt werden können, siehe beispielsweise GB-A-949 066. Der Zusatz von Aluminiumoxid zu Salzkernen zur Glättung der Oberflächen ist ebenfalls möglich und beispielsweise in JP-A-60118350 beschrieben.

Die vorstehend genannten Inhaltsstoffe oder Zuschlagstoffe können zusätzlich zu Bindemitteln, wie sie nachstehend beschrieben sind, eingesetzt werden.

Für Salzkerne geeignete Bindemittel sind organische und/oder anorganische Mittel Es kann sich um niedermolekulare, oligomere oder polymere Verbindungen handeln. Es können auch Mischungen von organischen und anorganischen Bindemitteln eingesetzt werden. Dabei können alle üblichen geeigneten organischen und/oder anorganischen Bindemittel eingesetzt werden. Die Mengen betragen 0,2 bis 20 Gew.-%, besonders bevorzugt 0,5 bis 10 Gew.%, insbesondere 1 bis 5 Gew.%, bezogen auf den gesamten Salzkern.

Beispiele für geeignete anorganische Bindemittel sind Phosphate, wie sie beispielsweise in DE-B-103 59 547 beschrieben sind. Gemäß dieser Ausfiihrungsform können anorganische Phosphate oder Mischungen anorganischer Phosphate eingesetzt werden. Geeignete Phosphate sind beispielsweise Alkalimetallphosphate und Metallphosphate, beispielsweise Natriumphosphat, Natriumpolyphosphat, Natriumtripolyphosphat, Aluminiumphosphate wie Monoaluminiumphosphat, Borphosphat wie auch Kaliumphosphate, beispielsweise Tetrakaliumpyrophosphat. Auch Mononatriumphosphat ist einsetzbar. Generell können die Phosphate sich von (Poly)Phosphat-Ketten unterschiedlicher Länge ableiten. Es können einzelne Phosphateinheiten vorliegen, wie beispielsweise im Mononatriumphosphat. Es können auch längere Phosphatketten unterschiedlicher Kettenzahl vorliegen wie im Tripolyphosphat oder Tetrapyrophosphat. Sie leiten sich von dem monomeren Phosphat durch Wasserabspaltung ab, die zu Di-Phosphaten, Tri-Phosphaten und letztendlich PolyPhosphaten führt. Diese Ketten können auch zu Ringen zusammengeschlossen werden, sodass so genannte Metaphosphate gebildet werden, die entsprechend der Anzahl der Phosphorsäure-Einheiten Tri-Metaphosphate, Tetra-Metaphosphate usw. sind.

In den Phosphaten können ein, mehrere oder alle Wasserstoffatome durch Metalle, beispielsweise Alkalimetalle oder Aluminium ersetzt sein. Gleiches gilt bei einem Ersatz durch Bor. Geeignete Phosphate werden teilweise als Feuerfest-Binder bezeichnet. Geeignete Mengen der Phosphatbinder liegen im Bereich von 0,5 bis 10 Gew.-%, bezogen auf die fertige Salzmischung. Besonders bevorzugt wird mit 1 bis 5 Gew.-% gearbeitet. Ferner können noch Trennmittel eingesetzt werden.

Geeignete Phosphate sind insbesondere Natriumpolyphosphat und Natriumhexametaphosphat wie auch Phosphorsäure an sich, wie beispielsweise auch in der DE-A-195 25 307 beschrieben. Erfindungsgemäß können neben den Phosphaten auch die freie Phosphorsäure und oligomere oder polymere Phosphorsäuren eingesetzt werden. Geeignete Phospatbindemittel sind unter Anderem auch in SU-A-16 39 872 beschrieben.

Polyphosphatketten oder Borationen zur Anwendung als Bindemittel sind zudem in der US 5,573,055 beschrieben. Die Polyphosphatketten und/oder Borationen leiten sich dabei vorzugsweise von mindestens einem wasserlöslichen Phosphat und/öder Boratglas ab. Ferner können auch Bentonite als Bindemittel eingesetzt werden.

Weitere geeignete Bindemittel sind in der US 5,711,792 beschrieben. Es werden ebenfalls Polyphosphatketten und Borationen angegeben. Dabei kann das wasserlösliche Phosphatglas vorzugsweise 30 bis 80 mol-% P₂O₅, 20 bis 70 mol-% X₂O, 0 bis 30 mol-% MO und 0 bis 15 mol-% L₂O₃ enthalten, wobei X Na, K oder Li bedeutet, M Ca, Mg oder Zn bedeutet und L Al, Fe oder B bedeutet. Besonders bevorzugt enthält das wasserlösliche Phosphatglas dabei 58 bis 72 Gew.-% P₂O₅, 28 bis 42 Gew.-% Na₂O und 0 bis 16 Gew.-% CaO. Bevorzugte Glassysteme leiten sich von Na₂O und P₂O₅ ab, beispielsweise 5 Na₂O und 3 P₂O₅. Es ist ebenfalls möglich, zusätzlich K₂O in den Gläsern vorliegen zu haben. Ebenfalls ist es möglich, als Bindemittel ein Molekularsiebmaterial einzusetzen, beispielsweise der Struktur Na₈₆[(AlO₂)₈₆(SiO₂)₁₀₆] x H₂O. Derartige Systeme sind ebenfalls in US 5,711,792 beschrieben.

Ferner können als anorganische Bindemittel Borax, Magnesiumoxid, Talkum und /oder Erdalkalimetallsalze eingesetzt werden. Diese Bindemittel können ebenfalls in Mengen von 0,5 bis 10 Gew.-% eingesetzt werden. Sie sind beispielsweise in US 3,356,129 beschrieben.

Diese Bindemittel werden durch Auflösen der entsprechenden wasserlöslichen Gläser in wässriger Lösung hergestellt und in dieser Form angewendet. Die einzusetzenden Mengen sind wiederum vorzugsweise 0,5 bis 10 Gew.-%, bezogen auf die fertige Salzmischung.

Weitere erfindungsgemäß einsetzbare Molekularsiebe und Wasserglas sowie weitere Kieselsäuren sind dem Fachmann bekannt.

Auch die in DE-A-19 24 991 beschriebenen Bindemittel für Kerne sind erfindungsgemäß einsetzbar. Dort ist beschrieben, bis zu 10 Gew.-% Borax, Magnesiumoxid oder Talkum einzeln oder im Gemisch zuzusetzen. Zudem können diese Inhaltsstoffe zusammen mit Wasserglas eingesetzt werden, oder Wasserglas kann allein als Bindemittel eingesetzt werden, um eine hohe Druck- und Biegefestigkeit zu erreichen. Es kann zusätzlich auf GB-A-1 274 966 verwiesen werden.

Es ist beispielsweise erfindungsgemäß auch möglich, die Salzkristalle mit Borax oder Wasserglas zu umhüllen oder zu beschichten, um eine bessere Verarbeitbarkeit zu gewährleisten.

Neben den beschriebenen Phosphatsystemen, silikatischen Systemen und deren Gemischen können auch weitere anorganische Systeme eingesetzt werden, die sich beispielsweise von Sulfaten oder Carbonaten sowie weiteren Metallsalzen ableiten. Geeignete Systeme sind dem Fachmann bekannt.

Als anorganische Bindemittel kommen so auch Gips oder Zement in Betracht, wobei es sich um die noch nicht mit Wasser abgebundene oder um die mit Wasser abgebundene Form handeln kann. Gips kann somit als Semihydrat wie auch als Dihydrat vorliegen. Zement ist in der Regel ein Gemisch aus Calciumsilikaten, Calciumaluminaten und Calciumferriten, das heißt aus CaO mit SiO₂ Al₂O₃ und Fe₂O₃ in unterschiedlichen Mengenverhältnissen aufgebaut.

Ferner können die anorganischen Bindemittel in Kombination mit organischen Bindemitteln eingesetzt werden. Beispielsweise können Wasserglas und ein synthetisches Harz als Bindemittel eingesetzt werden, wie es in der US 3,764,575 beschrieben ist. Dabei werden Wasserglas und ein synthetisches Harz als Bindemittel in einem Mengenverhältnis von 1 : 10 bis 10: 1, vorzugsweise 1 : 5 bis 5 : 1, insbesondere 2 : 1 bis 1 : 2 kombiniert. Das synthetische Harz kann ein Kondensationsprodukt auf Basis von Furan oder Phenol sein.

Es können erfindungsgemäß auch beliebige geeignete organische Bindemittel eingesetzt werden, die als Bindemittel für Salzkerne einsetzbar sind. Dabei handelt es sich insbesondere um oligomere oder polymere Systeme, jedoch können auch niedermolekulare organische Verbindungen wie beispielsweise Zucker eingesetzt werden.

Geeignete organische Bindemittelsysteme sind teilweise aus dem Stand der Technik für Salzkerne bekannt. Beispielsweise können Paraffinwachse, synthetische organische Harze wie Polystyrol oder Silikonharze eingesetzt werden. Zudem können Polyethylenglykole eingesetzt werden, die beispielsweise ein Molekulargewicht im Bereich von 4000 bis 8000, vorzugsweise 5000 bis 7000, aufweisen. Derartige Bindemittelsysteme sind beispielsweise in GB-A-2 105 312 und EP-A-0 127 367 beschrieben. Auf derartige Systeme wird beispielsweise auch in US 5,573,055 hingewiesen. Ein System aus Alkali- oder Erdalkalimetallchloriden, -sulfaten oder -boraten, Wasserglas und synthetischen Harzen als Bindemittel ist beispielsweise in US 3,764,575 beschrieben.

Als organische Bindemittel kommen insbesondere natürliche und synthetische Polymere in Betracht. Natürliche Polymere sind beispielsweise Cellulose und Cellulose-Derivate wie Carboxymethylcellulose, Celluloseacetat, Celluloseacetobutyrate wie auch andere Cellulose-Ester und Cellulose-Ether. Weitere Cellulose-Derivate können durch Oxidationsreaktionen oder durch Wasserabspaltung gebildet werden. In diesem Zusammenhang kann auf die Stichwörter "Cellulose", "Cellulose-Derivate", "Cellulose-Ester" und "Cellulose-Ether" in Römpp, Chemielexikon, 9. Aufl., verwiesen werden.

Weitere natürliche Polymere sind Casein oder Stärke.

Ferner können Polysacharide und auch niedermolekulare Zucker eingesetzt werden. Geeignete synthetische Bindemittel sind beispielsweise Polyvinylpyrrolidon und davon abgeleitete Polymere wie Vinylpyrrolidon-Styrol-Copolymere, Vinylpyrrolidon-Vinylacetat-Copolymere und ähnliche Polymere. Auch Polyalkylenglycole und deren Ether können eingesetzt werden, insbesondere Polyethylenglycol. Die Polymere können pulverförmig, körnig oder latexförmig eingesetzt werden.

Ferner kommen die technischen Kunststoffe wie Polyolefine, beispielsweise Polyethylene und Polypropylene, Polystyrole, Polyvinylchloride, Polyamide, Polyurethane, Polyester, Polyether, Polysulfone, Polyetherketone, Polycarbonate, usw. in Betracht. Auch polymere Harze können erfindungsgemäß eingesetzt werden, beispielsweise Polyester-Harze oder Epoxid-Harze. Es kann sich dabei um Ein-Komponenten- oder Zwei-Komponenten-Systeme handeln. Organische Bindemittel werden üblicherweise in Mengen von 0,5 - 10 Gew.-%, bezogen auf die gesamte Salzmischung, eingesetzt.

Einsetzbare Polymer-Dispersionen können beispielsweise auf Acrylestern oder Styrol/Butadien basieren.

Beispiele geeigneter Polymere sind Polystyrol, Polyethylen, Polyvinylchlorid, Polybutadien, Polyacrylnitril, Polymethylmethacrylate, Polyethylenterephthalate, Polyamid 6, Polyamid 66. Spezielle Polymer-Klassen sind Acetale, Polyamide, Polyamidimide, Polyarylate, Polycarbonate, Polyester, Polyether, Polyetherketone, Polyetherimide, Polyimide, Polyphenylenoxide, Polyphenylensulfide und Polysulfone. Unter Harzen können insbesondere Phenol-Formaldehyd-Harze, Hamstoff-Formaldehyd-Harze, ungesättigte Polyesterharze, Epoxyharze und Melamin-Formaldhehyd-Harze genannt werden. Unter Kautschuken können insbesondere Styrol-Butadien-Kautschuke, Polybutadienkautschuke, Ethylen-Propylen-Kautschuke, Polychloropren-Kautschuke, Polyisopren-Kautschuke, Nitril-Kautschuke, Butyl-Kautschuke, Silikon-Kautschuke und Urethan-Kautschuke genannt werden.

Die Polymere können dabei radikalisch, anionisch, kationisch oder durch Strahlung polymerisiert sein. Erfindungsgemäß eingesetzte organische Polymere sind insbesondere vinylische Polymere. Diese Copolymere können durch beliebige geeignete Verfahren auf die Salze zur Bildung der verfestigten Salzkerne aufgebracht werden. Sie können beispielsweise in geschmolzener oder gelöster Form aufgebracht werden. Die im Einzelfall notwendigen und geeigneten Mengen können durch den Fachmann durch einfache Handversuche ermittelt werden.

Eine spezielle Klasse geeigneter Polymere sind Polyacetale, insbesondere Polyoxymethylene und deren Copolymere. Diese werden häufig anstelle von Paraffin- oder Polyolefin-Dispergiermitteln eingesetzt. Es können auch Mischungen aus Polyoxymethylenhomo- oder - Copolymerisaten und einem damit nicht mischbaren Polymerisat als Bindemittel eingesetzt werden. Polyoxymethylenhomo- oder - Copolymerisate haben vorzugsweise einen Schmelzpunkt von mindestens 150 °C und Molekulargewichte (Gewichtsmittelwert) im Bereich von 5000 bis 150000. Es können beispielsweise Mischungen aus Polyoxymethylen, Homo- und Copolymerisaten und Polymeren auf Basis von Olefinen, vinyl-aromatischen Monomeren, Vinylestern, Vinylalkylethern oder Alkylmethacrylaten eingesetzt werden. Geeignete Polymere sind beispielsweise in EP-B-0 951 460 und EP-B-1 276 811 beschrieben. Auch für Polyoxymethylene kann zudem auf EP-A-0 413 231, EP-A-0 444 475, EP-A-0 465 940 und EP-A-0 446 708 verwiesen werden. Zur Entfernung des Bindemittels kann dieses mit einer gasförmigen, säurehaltigen Atmosphäre behandelt werden. Entsprechende Verfahren sind beispielsweise in DE-A-39 29 869 und DE-A-40 00 278 sowie EP-B-1 276 811 und EP-B-0 951 460 beschrieben.

Als Bindemittel erfindungsgemäß geeignete organische Polymere sind beispielsweise insbesondere die für Spritzgussanwendungen eingesetzten Polymere.

Weitere geeignete organische Bindemittel sind beispielsweise Bitumen und Teer. Für weitere geeignete Bindemittel kann auf das Stichwort "Bindemittel" in Römpp Chemielexikon, 9. Aufl., verwiesen werden.

Die Salzkerne werden vorzugsweise durch Verpressen unter Druck und anschließende Wärmebehandlung hergestellt, wobei vorzugsweise mit einem Druck im Bereich von etwa 600 bis 2000 bar und einer Temperatur von unterhalb 730 °C, vorzugsweise von 200 bis 650 °C gearbeitet wird. Verpressen unter Druck und Wärmebehandlung können auch gleichzeitig durchgeführt werden. Damit sind die Salzkerne gemäß einer Ausführungsform - der Erfindung hoch verdichtet.

Das Umgießen durch Kunststoffspritzguß erfolgt vorzugsweise bei Temperaturen im Bereich von 100 bis 400 °C und Drücken im Bereich von 100 bis 2000 bar. Je nach Ausgangstemperatur der thermoplastischen Kunststoff-Formmasse kann die Gießform gewärmt oder gekühlt werden, um ein optimales Fliessverhalten der Formmasse und ein optimales Abkühlungsverhalten zu erreichen. Es ist zudem erfindungsgemäß möglich, den Salzkern vor dem Umgießen anzuwärmen, um ein besseres Fliessen der Formmasse zu gewährleisten. Dabei beträgt die Vorwärmtemperatur bevorzugt maximal 200 °C. Sofern der Salzkern nicht vorgewärmt wird, kann dies in vorteilhafter Weise zum Abschrecken oder Erstarrenlassen der Formmasse dienen.

Erfindungsgemäß können beliebige gewünschte Kunststoff-Hohlformkörper nach dem Verfahren hergestellt werden. Bevorzugt stammen die Hohlformkörper aus dem Automobilsektor, insbesondere Motorensektor. Bevorzugt weisen die Hohlformkörper Stutzen oder Kanäle zur Führung von Fluiden auf oder stellen solche dar. Beispiele geeigneter Hohlformkörper sind Wasserstutzen und Leitungssysteme, um Fluide zu führen. Es kann sich beispielsweise um die Führung von Wasser, Luft, Kraftstoff oder Öl handeln. Unter Wasser werden dabei auch wässrige Systeme wie Bremsflüssigkeit, Kühlwasser, usw., verstanden.

Bevorzugt werden die erfindungsgemäßen Hohlformkörper dort eingesetzt, wo bislang Aluminiumgussteile eingesetzt wurden, Kunststoff-Hohlformkörper jedoch bereits ausreichend stabil sind. Neben einer Kostenersparnis kann durch die erfindungsgemäßen Hohlformkörper auch eine Gewichtsverminderung erzielt werden, die wiederum zu einer Kraftstoffersparnis führen kann.

Die erfindungsgemäß hergestellten Kunststoff-Hohlformkörper können auch Einbauten wie Ventile oder Klappen aufweisen. Diese Einbauten oder Bauteile können nachträglich in die Hohlformkörper eingebaut werden. Es ist jedoch auch möglich, diese Bauteile bereits in den Salzkern einzubringen und dort so zu fixieren, dass sie im späteren Hohlformkörper bereits in der richtigen Position vorliegen. Hierdurch wird ein nachträgliches Montieren vermieden, und durch eine einteilige Hohlformkörper-Ausbildung wird eine erhöhte mechanische und thermische Stabilität erreicht.

Bei dem Bauteil kann es sich beispielsweise um ein mechanisches und/oder elektrisches/elektronisches Bauteil handeln, das in formschlüssiger Verbindung mit dem Salzkern vorliegt. Es kann beispielsweise später ganz oder teilweise beweglich oder flexibel mit dem Hohlformkörper verbunden sein. Das Bauteil kann auch eine Stützfunktion für den Kern ausüben. Üblicherweise übt das Bauteil jedoch keine Stützfunktion aus und erhöht nicht die mechanische Stabilität im Vergleich zu einem massiven Salzkern. Es kann erfindungsgemäß vom Salzkern weitgehend oder vollständig umschlossen sein. Beispielsweise können nur die Achsen oder Achslager an der Oberfläche des Salzkerns anliegen, so dass später die Achse oder das Achslager fest mit dem Gussteil verbunden sind.

Die Erfindung wird durch das nachstehende Beispiel näher erläutert.

### Beispiel

Es wurden zunächst unterschiedliche Salzkerne in M-Form durch Verpressen von Salz hergestellt. Die Länge des M-förmigen Salzkerns betrug dabei etwa 12 cm. Die Herstellung des Salzkerns erfolgte durch Verpressen unter Druck und gegebenenfalls nachfolgende Wärmebehandlung. Dabei wurden unterschiedliche Salzmischungen eingesetzt. Einerseits wurde mit Normalsalz (NaCl) gearbeitet, andererseits mit Feinsalz (NaCl). Diese Salze wurden ohne weitere Bindemittel eingesetzt. Darüber hinaus wurde mit Bindemittel-haltigen Salzmischungen gearbeitet, die ein Phosphat-haltiges Bindemittel aufwiesen.

Die Salzkerne wurden in ein Formwerkzeug eingelegt und im Spritzgießverfahren mit Polystyrol umspritzt. Dabei betrug die Vorschmelztemperatur 230 bis 260 °C. Der Salzkern wurde an den Spitzen des M im Werkzeug fixiert, und die Anschnittpunkte zur M-Form befanden sich an den Außenkanten am unteren Ende der Flanken des M.

In einem zweiten Versuch wurde als Kunststoffmaterial Polypropylen eingesetzt. Das Material wurde bei einer Temperatur von 230 °C im beheizten Massezylinder und im Schmelzenstauraum geschmolzen, bevor es eingespritzt wurde.

Ein Großteil der Salzkerne konnte umspritzt werden, ohne dass es zu einem Bruch des Salzkerns gekommen wäre. Bei Verlagerung der Anschnittpunkte an die beiden äußeren Schultern des M konnte der Anteil an gebrochenen Salzkernen nochmals deutlich vermindert werden.

Es zeigte sich, dass mit dem erfindungsgemäßen Verfahren Salzkerne mit Kunststoffen umspritzt werden können, ohne dass es zu nennenswerten Brüchen der Salzkerne kommt.

Nochmals verbesserte Ergebnisse wurden erzielt, wenn die Salzkerne vor dem Spritzgießen vorgewärmt wurden. Durch das Vorwärmen der Kerne erhielt man ein besseres Fließverhalten des Kunststoffes und eine bessere Fixierung im Werkzeug.

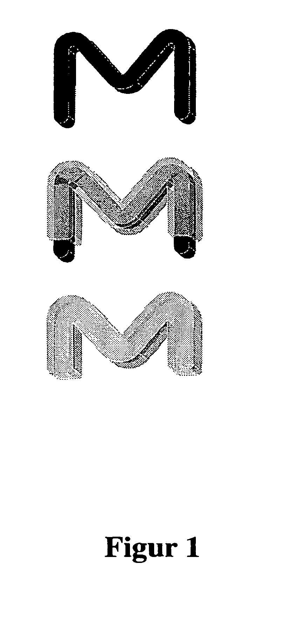

Die prinzipielle Vorgehensweise ist in der beigefügten Zeichnung in Figur 1 dargestellt. Von oben nach unten sind ein Salzkern in M-Form, der umspritzte Salzkern und der Kunststoffkörper nach dem Auswaschen des Salzkerns dargestellt.

## Patentansprüche

1. Verwendung von wasserlöslichen Salzkernen, die 0,2 bis 20 Gew.-%, bezogen auf den gesamten Salzkerns, an organischen und/oder anorganischen Bindemitteln enthalten, in Gießformen zur Herstellung von Hohlfonnkörpern im Kunststoffguß.

2. Verwendung nach Anspruch 1, **dadurch gekennzeichnet, dass** der Kunststoffguß ein Kunststoffspritzguß mit thermoplastischen Kunststoff-Formmassen ist.

3. Verfahren zur Herstellung von Kunststoff-Hohlformkörpem durch Positionieren eines wasserlöslichen Salzkerns in einer Gießform, Umgießen des Salzkerns mit einer thermoplastischen Kunststoff-Formmasse und nach dem Erstarren der thermoplastischen Kunststoff-Formmasse Herausspülen des Salzkerns mit einem wasserhaltigen Lösungsmittel, **dadurch gekennzeichnet, dass** der wasserlösliche Salzkern neben wasserlöslichem Salz 0,2 bis 20 Gew.-%, bezogen auf den gesamten Salzkerns, organische und/oder anorganische Bindemittel, und gegebenenfalls weitere Additive enthält.

4. Verfahren nach Anspruch 3, **dadurch gekennzeichnet, dass** als Bindemittel anorganische Phosphate oder Mischungen anorganischer Phosphate eingesetzt werden.

5. Verfahren nach Anspruch 3 oder 4, **dadurch gekennzeichnet, dass** das Umgießen durch Kunststoffspritzguß erfolgt.

6. Verfahren nach einem der Ansprüche 3 bis 5, **dadurch gekennzeichnet, dass** das Umgießen mit einer thermoplastischen Kunststoff-Formmasse erfolgt, basierend auf Styrolhomo- und -copolymeren, Polyolefinhomo- und -copolymeren, Polyamiden, Polycarbonaten, Polyethers, Polyestern, Polyketonen, Polysulfonen, Polyurethanen, Elastomeren und deren Gemischen.

7. Verfahren nach Anspruch 6, **dadurch gekennzeichnet, dass** die Kunststoff-Fornnmassen auf Polystyrol, Polystyrol/acrylnitril, Polyethylen, Polypropylen, Polyamid-6, Polyamid-66, Polycarbonaten, Poly(meth)acrylsäureestern, Polyvinylchlorid oder deren Gemischen basieren.

8. Verfahren nach einem der Ansprüche 3 bis 7, **dadurch gekennzeichnet, dass** die Kunststoff Formmasse 10 bis 60 Gew.-% Fasern oder Füllstoffe, bezogen auf das Gesamtgewicht, enthält.

9. Verfahren nach einem der Ansprüche 3 bis 8, **dadurch gekennzeichnet, dass** der Salzkern vor dem Umgießen angewärmt wird.

10. Verfahren nach einem der Ansprüche 3 bis 9, **dadurch gekennzeichnet, dass** die Hohlformkörper Stutzen oder Kanäle zur Führung von Fluiden aufweisen oder darstellen.

11. Verfahren nach einem der Ansprüche 3 bis 10, **dadurch gekennzeichnet**, das die Hohlformkörper aus dem Autoznobilsektor stammen.

## Claims

1. The use of water-soluble salt cores containing 0.2 to 20 % by weight, based on the total salt core, of organic and/or inorganic binders in molds for the production of hollow moldings by plastic molding.

2. The use as claimed in claim 1, **characterized in that** the plastic molding is a plastic injection molding with thermoplastic molding materials.

3. A process for the production of hollow plastic moldings by positioning a water-soluble salt core in a mold, molding a thermoplastic molding material around the salt core and, after solidification of the thermoplastic molding material, washing out the salt core with a water-containing solvent, **characterized in that** the water-soluble salt core contains in addition to water-soluble salt 0.2 to 20 % by weight, based on the total salt core, or organic and/or inorganic binders, and optionally further additives.

4. The process as claimed in claim 3, **characterized in that** the binders are inorganic phosphates or mixtures of inorganic phosphates.

5. The process as claimed in claim 3 or 4, **characterized in that** the molding is effected by plastic injection molding.

6. The process as claimed in any of claims 3 to 5, **characterized in that** the molding is effected with a thermoplastic molding material based on styrene homo- and copolymers, polyolefin homo- and copolymers, polyamides, polycarbonates, polyethers, polyesters, polyketones, polysulfones, polyurethanes, elastomers and mixtures thereof.

7. The process as claimed in claim 6, **characterized in that** the plastic molding materials are based on polystyrene, polystyrene/acrylonitrile, polyethylene, polypropylene, polyamide-6, polyamide-66, polycarbonates, poly(meth)acrylates, polyvinyl chloride or mixtures thereof.

8. The process as claimed in any of claims 3 to 7, **characterized in that** the plastic molding material contains from 10 to 60% by weight of fibers or fillers, based on the total weight.

9. The process as claimed in any of claims 3 to 8, **characterized in that** the salt core is preheated before the molding.

10. The process as claimed in any of claims 3 to 9, **characterized in that** the hollow moldings have or represent connections or channels for carrying fluids.

11. The process as claimed in any of claims 3 to 10, **characterized in that** the hollow moldings originate from the automotive sector.

## Revendications

1. Utilisation de noyaux de sel solubles dans l'eau, qui contiennent 0,2 à 20 % en poids, par rapport à la totalité du noyau de sel, de liants organiques et/ou inorganiques, dans des moules pour la fabrication de corps moulés creux dans le moulage de plastiques.

2. Utilisation selon la revendication 1, **caractérisée en ce que** le moulage de plastiques est un moulage par injection de plastiques avec des matériaux de moulage plastiques thermoplastiques.

3. Procédé de fabrication de corps moulés creux plastiques en positionnant un noyau de sel soluble dans l'eau dans un moule, en versant autour du noyau de sel un matériau de moulage plastique thermoplastique et en éliminant le noyau de sel par rinçage avec un solvant contenant de l'eau après la solidification du matériau de moulage plastique thermoplastique, **caractérisé en ce que** le noyau de sel soluble dans l'eau contient, outre un sel soluble dans l'eau, 0,2 à 20 % en poids, par rapport à la totalité du noyau de sel, de liants organiques et/ou inorganiques, et éventuellement des additifs supplémentaires.

4. Procédé selon la revendication 3, **caractérisé en ce que** des phosphates inorganiques ou des mélanges de phosphates inorganiques sont utilisés en tant que liants.

5. Procédé selon la revendication 3 ou 4, **caractérisé en ce que** le versage a lieu par moulage par injection de plastique.

6. Procédé selon l'une quelconque des revendications 3 à 5, **caractérisé en ce que** le versage a lieu avec un matériau de moulage plastique thermoplastique à base d'homo- et copolymères de styrène, d'homo- et copolymère de polyoléfine, de polyamides, de polycarbonates, de polyéthers, de polyesters, de polycétones, de polysulfones, de polyuréthannes, d'élastomères et leurs mélanges.

7. Procédé selon la revendication 6, **caractérisé en ce que** les matériaux de moulage plastiques sont à base de polystyrène, de polystyrène/acrylonitrile, de polyéthylène, de polypropylène, de polyamide-6, de polyamide-66, de polycarbonates, d'esters de l'acide poly(méth)acrylique, de polychlorure de vinyle ou leurs mélanges.

8. Procédé selon l'une quelconque des revendications 3 à 7, **caractérisé en ce que** le matériau de moulage plastique contient 10 à 60 % en poids de fibres ou de charges, par rapport au poids total.

9. Procédé selon l'une quelconque des revendications 3 à 8, **caractérisé en ce que** le noyau de sel est chauffé avant le versage.

10. Procédé selon l'une quelconque des revendications 3 à 9, **caractérisé en ce que** les corps moulés creux comportent ou constituent des tubulures ou des canaux pour la conduite de fluides.

11. Procédé selon l'une quelconque des revendications 3 à 10, **caractérisé en ce que** les corps moulés creux proviennent du secteur automobile.
